# EUROPEAN PATENT APPLICATION

(11) **EP 2 031 480 A1**
(43) Date of publication of application: **04.03.2009**
(21) Application number: 06119314.0
(22) Date of filing: 22.08.2006
(51) Int. Cl.: G06F 3/01

(54) **Fibre array input device**

(71) Applicant: BenQ Mobile GmbH & Co. oHG, 81667 München (DE)
(72) Inventor: Jarczyk, Alexander, 85356, Freising (DE); Zechlin, Oliver, 81825, München (DE)
(74) Representative: Samson & Partner

(57) **Abstract**

The invention provides an apparatus for entering control information into a data processing apparatus, that includes one or more fibres (1a), a support (2) having an opening for each of the fibres (1a), an elastic coating (5) being adapted to form a fibre cladding (5), and at least one sensor (4a, 4b, 4c, 4d, 6, 7, 8, 9). Each opening of the support (2) is hereby adapted to form a mount for a fibre (1a) and the elastic coating (5) provides a cladding for the fibre particularly inside the opening. The at least one sensor is furthermore adapted to provide an output signal indicative of a relative position of the fibre (1a) inside the opening accommodating the fibre.

## Description

The present invention relates to input devices for data processing apparatuses and in particular to an input device offering haptic feedback.

Current input devices for entering pointing and control information into a data processing apparatus, like e.g. a touchpad, a trackball, a mouse, a click wheel, a so-called Joystick for mobile phones and the like more use plan surfaces, rotating items or lever arms for providing user input means. The haptic feedback provided by these input devices is only very limited and usually independent of the strength by which a user acts on the respective input means.

The speed of a response to an operation of an input device is usually controlled by software and only on some input devices also only to a limited extent by the speed of a user's control motion. But none of the currently known input devices offers a feedback enabling a user to feel the response of an application to his input action.

It is therefore an object of the present invention to provide an apparatus for entering control information into a data processing apparatus that enables a haptic feedback to a users input action.

The above object is achieved by the invention as defined in the independent claim.

The invention comprises an apparatus for entering control information into a data processing apparatus that comprises one or more fibres, a support having an opening for each of the fibres, an elastic coating being adapted to form a fibre cladding, and at least one sensor. Hereby, each opening of the support is adapted to form a mount for a fibre. Further, the elastic coating forms a cladding for the fibre inside the opening, and the at least one sensor is adapted to provide an output signal indicative of a relative position of the fibre inside the opening accommodating the fibre

It is noted in this context that the terms "comprise", "having", and "with" as well as grammatical modifications thereof indicate when used in this specification and the claims the presence of technical features like stated components, figures, integers steps or the like, and do by no means preclude a presence or addition of one or more other features, particularly other components, integers, steps or groups thereof. The same applies to the term "includes" and its grammatical modifications when used in this specification.

The invention advantageously enables a haptic feedback by putting up a resistance to a user's input action. It thus not only allows control input by evaluating a directional movement, but also by evaluating the pressure exerted on the input device.

Additional advantageous features of the present invention are claimed in the respective sub-claims.

For directly sensing the relative position of the fibre within the opening, the sensitive sections of the at least one sensor are advantageously located inside the opening and around the elastic coating. In order to achieve a simple sensor structure, the sensitive sections may effectively be formed by capacitive, piezoelectric, strain gage or mechanical sensor elements or a combination thereof.

In a further advantageous embodiment of the invention, which may also be combined with a structure described above, the sensitive section of the at least one sensor provides a resistive area and the foot of the fibre together with the sensitive section form a potentiometer structure.

The invention may further be implemented with the at least one sensor comprising an optical sensor, whereby the optical sensor may comprise an array of light-sensitive elements and/or a transparent screen.

According to an advantageous development, a sensor output evaluation means is provided for evaluating a signal being indicative of the deflection and/or bending of the fibre (1a) inside the opening, whereby the evaluation is based on one or more output signals provided by the at least one sensor.

Further features of the invention will be apparent from the description of embodiments of the invention together with the claims and the attached figures. Embodiments of the invention may implement single features or several features in combination. In the following description, the present invention is explained in more detail with respect to special embodiments and in relation to the enclosed drawings, in which
- Figure 1a: shows a schematic sectional view of a sensor section according to the present invention with the fibres of the array in rest position,
- Figure 1b: shows a schematic sectional view of the sensor section of Figure 1a with part of the fibres in compressed position,
- Figure 2a: shows a detailed view of a fibre mount according to a first embodiment of the present invention with the fibre being in rest position,
- Figure 2b: shows the fibre mount of Figure 2a with the fibre being in a laterally deflected position,
- Figure 2c: shows the fibre mount of Figure 2a with the fibre being compressed in a bended state,

- Figure 3a: shows a fibre mount according to a further embodiment of the present invention with the fibre being in rest position,
- Figure 3b: shows the fibre mount of Figure 3a with the fibre being laterally deflected, and
- Figure 4: shows a modification of the fibre mount of Figure 3a with an optical sensor arrangement.

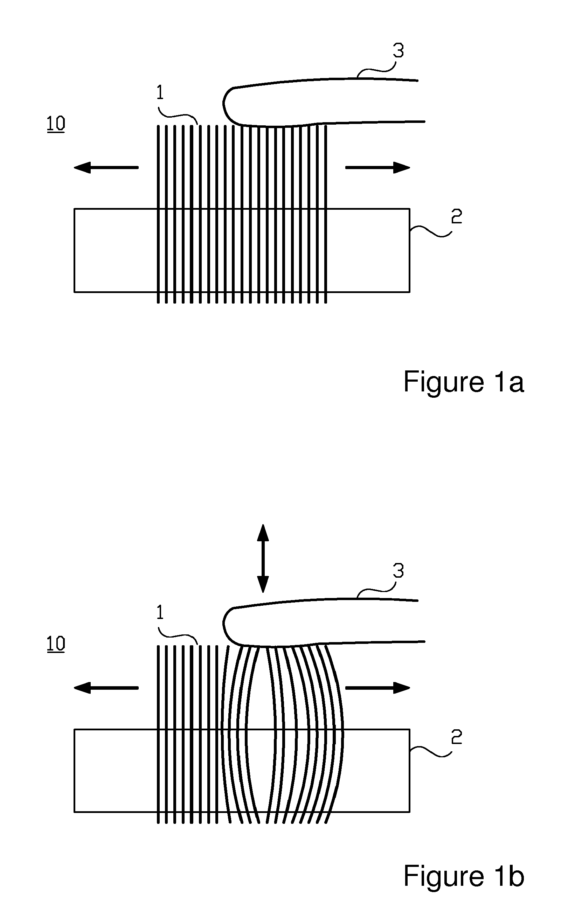

Referring to Figure 1a, a sectional view of an input device sensor section 10 according to the present invention is shown. The sensor section 10 comprises a fibre array 1 which is accommodated in a support 2. In the rest position, the individual fibres of the array 1 are aligned in a predefined direction. The parallel arrangement of the fibres as shown is however not necessarily required. Input commands are created by stroking the fibres of the array 1 for instance with a user's finger 3. A directional type of input command may e.g. be entered by stroking the fibres of the array 1 in a certain direction as illustrated by the arrows shown in Figure 1a. The term "directional command" as used within this specification describes a command that causes a movement of a means controlled by a data processing apparatus, to which the input device is connected. The means may be formed by one or more graphical elements shown on a display of the data processing apparatus. It may likewise be formed by an apparatus controlled by the data processing apparatus. For entering a two-dimensional directional command, the fibre array is preferably formed by a two-dimensional, brush-like array of fibres.

In Figure 1b some pressure is exerted by the user's finger onto the fibre array 1. The individual fibres of the array are now not only bend from their position of rest, but are also compressed as indicated by the vertical arrow in Figure 1b. The compression of the fibres may be used to derive a further command interpreting the pressure put on the fibre array e.g. as a speed of movement command.

Due to the elastic properties of the fibres, a user experiences a haptic feedback caused by the fibres resistance against being bent. The resistance depends on the type of fibres used, particularly on their material, length, strength properties and the like more. Any type of fibres may be used like fibre glass or optical fibres, polymer fibres or natural fibres. A brush-like arrangement of the fibres allows of a free space like control input, e.g. circular movements of a finger on the array 1 being interpreted as a rotation command. Also a movement command for the third-dimension may be made possible by allowing for instance a finger to penetrate the space between the fibres, whereby the degree of the fibres being bent apart will be utilised as a directional command. Further also the pressure exerted on the array may be used as a directional command for the third dimension. But the pressure may also be used along with a two-dimensional input as an additional instruction forming a further feature of the instructed movement, like for instance speed of movement.

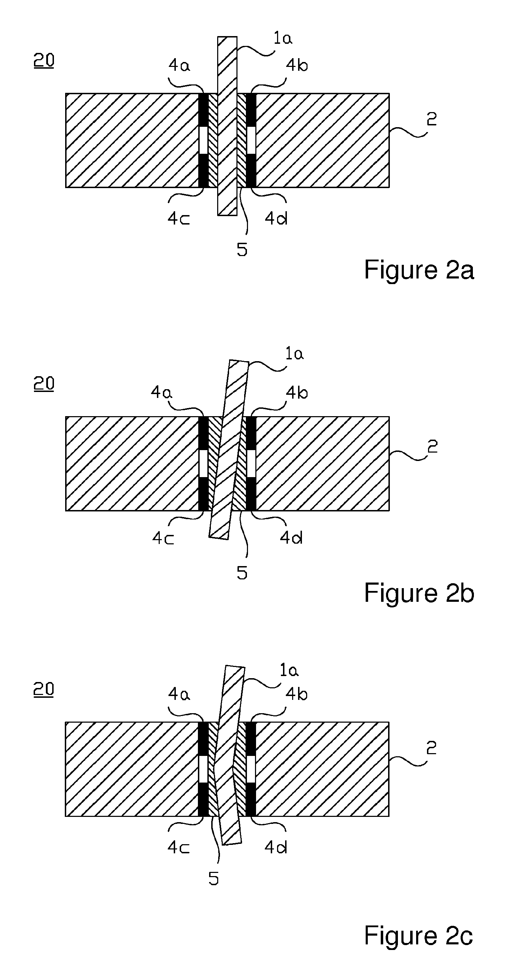

For evaluating a fibres deflection from its rest position and/or its compression, each fibre 1a of the array 1 is individually mounted in the support 2 as shown e.g. in Figure 2a. A section of the fibre 1a is arranged within an opening formed in the support 2. Inside the opening, the fibre 1a is coated with an elastic material 5 preferably enclosing the fibre material like a cladding. The elastic properties of the coating material 5 allow for a displacement of the fibre 1a with respect to its rest position inside the support 2. A sensor is placed around the cladding 5 for sensing the relative position of the fibre 1a within the elastic material 5. In the example shown, the sensor comprises four sensitive sections 4a, 4b, 4c, and 4d, with two sensitive sections 4a and 4b being located on the upper end of the cladding and the other two sensitive sections 4c and 4d on the lower end of the cladding 5. If the sensitive sections of each pair 4a and 4b or 4c and 4d, respectively, are each located on opposite sides of the fibre, a one-dimensional deflection or bending of the fibre can be detected. For a detection of a fibre deflection or bending in two orthogonal dimensions, more sensitive sectors will usually be required.

In the example 20 illustrated in Figures 2a, 2b, and 2c, the sensitive sections are adapted to provide an output signal indicative of the average distance between a respective sensitive section and the fibre 1a. Capacitive Sensors, piezoelectric sensors, sensors using strain gages or mechanical sensors may hereto be used as appropriate sensor elements. Instead of using one sensor with several sensing sections as indicated above, several sensors may be used, whereby a sensor may be limited to carry only one sensitive section or have more than one sensitive section but is restricted for measurements on one side of the cladding 5 only.

If the fibre is located in its rest position like shown in Figure 2a, the output signals of all sensing sections 4a, 4b, 4c, and 4d are substantially identical. For a lateral deflection of the fibre as shown in Figure 2b a different result is obtained. While the distance to the sensing sections 4a and 4d has increased, the fibre 1a is now closer to the sensing sections 4b and 4c as compared to the rest position. The different distances are accordingly reflected by the output signals of the sensing sections, such that the signals of the sensing elements located directly opposite each other both on one face of the support and across the support are significantly different while the signals of the sensing elements facing each other diagonally show substantially the same value.

For the fibre being bent as illustrated in Figure 2c, e.g. by compressing the fibre, the situation is different. Although the fibre 1a might exit the opening holes in the support 2 at the same location than when being in its resting position, the outer curvature line of the fibre will be closer to the cladding 5 circumference than the inner curvature line of the fibre inside the opening. Accordingly, the sensor sections 4a and 4c provide an output signal indicating a shorter distance to the fibre than the sensor sections 4b and 4d.

It becomes clear from the above described, that it is possible to distinguish between a lateral deflection of a fibre and a compression of a fibre by simply interrelating the individual output signals of sensing sections. If the output signals of sensing sections placed diagonally across the cladding 5 are substantially equal, a fibre deflection is present, and else a fibre compression has to be assumed. The components of a combined lateral deflection and compression of a fibre 1a can easily be determined by linear combination of the sensor section's output signals.

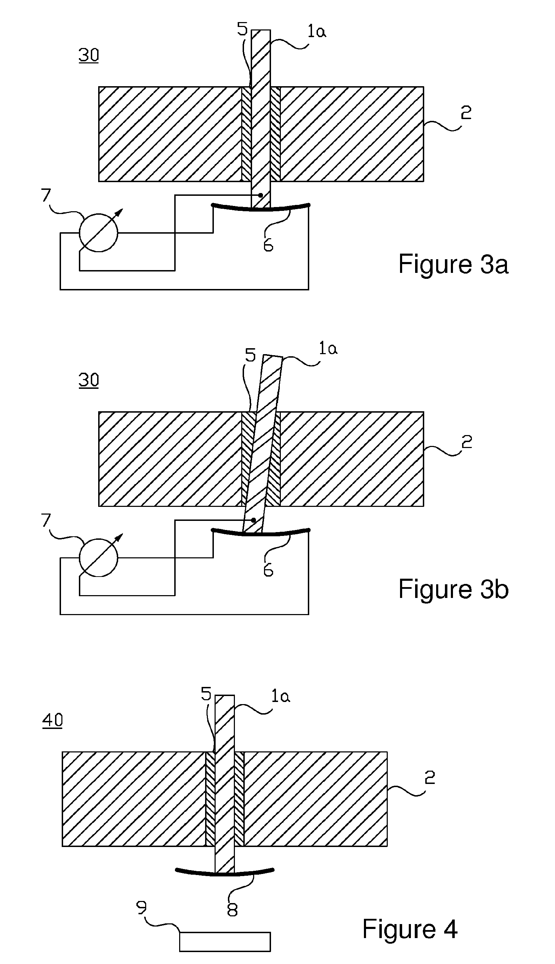

In the example shown in Figures 2a through 2c, the sensing sections are located within the opening formed in support 2 for receiving fibre 1. In an alternative embodiment 30 of the present invention, the sensor is located at the foot of the fibre 1a as illustrated in Figures 3a and 3b. The fibre 1a itself or at least a surface of the fibres foot-section is formed by electrically conducting material. The foot of the fibre rests on a resistive surface 6, which opposite ends are connected to a metering means 7 that also provides for a third input allowing to an electrical connection to the fibre's foot. The metering means 7 is adapted to provide an output signal indicative of the displacement of the fibre's foot from its rest position on the resistive surface 6. The foot of the fibre 1a and the resistive surface 6 together constitute a potentiometer structure.

It is understood, that a person skilled in the art will easily extend the linear working of the potentiometer illustrated in Figures 2a and 2b into a two-dimensionally operable potentiometer adapted for measuring the fibre deflection in two orthogonal directions. The resistive surface 6 may be combined with a (not shown) pressure sensitive sensor for providing a signal indicative of the strength by which the fibre 1a is compressed.

Instead of using a resistive surface as shown in Figures 3a and 3b, the location of the fibre's foot may also be determined optically as illustrated for the embodiment 40 shown in Figure 4. Here, the foot of the fibre 1a shades a transparent screen 8 illuminated by a source not shown in the Figure. The location of the shadow on the screen is then determined by means of an optical position sensitive sensor 9, like e.g. a camera module or a two-dimensional array of CCD (Charge Coupled Device) or CMOS (Complementary Metal Oxide Semiconductor) sensors located beneath the transparent screen. Instead of using a single optical sensor for each fibre 1a, a sensor is preferred, that covers the area of the whole fibre array 1, with the signals being evaluated similar to image evaluation. If the sensor is placed close enough to the feet of the fibres, the transparent screen may be omitted.

In a preferred embodiment of the present invention, a sensor output evaluation means is provided to evaluate the deflection and/or bending of the fibre 1a inside the opening accommodating the fibre based on the output signals obtained by the sensor elements used for the sensitive sections of the respective sensors.

### List of reference signs

- 1: fibre array
- 1a: fibre
- 2: support
- 3: user's finger
- 4a, 4b, 4c,: 4d sensitive sections
- 5: elastic material, cladding
- 6: resistive surface
- 7: metering means
- 8: transparent screen
- 9: optical position sensitive sensor
- 10: first embodiment
- 20: second embodiment
- 30: third embodiment
- 40: fourth embodiment

## Claims

1. Apparatus for entering control information into a data processing apparatus, comprising:
- one or more fibres (1a),
- a support (2) having an opening for each of the fibres (1a),
- an elastic coating (5) being adapted to form a fibre cladding (5), and
- at least one sensor (4a, 4b, 4c, 4d, 6, 7, 8, 9), wherein each opening of the support (2) is adapted to form a mount for a fibre (1a), the elastic coating (5) forms a cladding for the fibre inside the opening, and the at least one sensor is adapted to provide an output signal indicative of a relative position of the fibre (1a) inside the opening accommodating the fibre.

2. Apparatus according to claim 1,
**characterised in**
**that** the sensitive sections (4a, 4b, 4c, 4d) of the at least one sensor are located inside the opening and around the elastic coating (5).

3. Apparatus according to claim 2,
**characterised in**
**that** the sensitive sections (4a, 4b, 4c, 4d) are formed by capacitive, piezoelectric, strain gage or mechanical sensor elements or a combination thereof.

4. Apparatus according to claim 1, 2 or 3,
**characterised in**
**that** the sensitive section (6) of the at least one sensor (6, 7) provides a resistive area and the foot of the fibre (1a) together with the sensitive section (6) form a potentiometer structure.

5. Apparatus according to one of the preceding claims,
**characterised in**
**that** the at least one sensor comprises an optical sensor (9).

6. Apparatus according to claim 5,
**characterised in**
**that** the optical sensor (9) comprises an array of light-sensitive elements.

7. Apparatus according to claim 5 or 6,
**characterised in**
**that** the at least one sensor comprises a transparent screen (8).

8. Apparatus according to one of the preceding claims,
**characterised by**
a sensor output evaluation means for evaluating a signal being indicative of the deflection and/or bending of the fibre (1a) inside the opening based on one or more output signals provided by the at least one sensor.
